# EUROPÄISCHE PATENTSCHRIFT

(11) **EP 1 455 107 B1**
(45) Veröffentlichungstag und Bekanntmachung des Hinweises auf die Patenterteilung: **03.01.2007**
(21) Anmeldenummer: 04004631.0
(22) Anmeldetag: 01.03.2004
(51) Int. Cl.: B60K 23/02, F16D 48/02

(54) **Antriebsstrang**
Drive train
Chaîne de transmission

(30) Priorität: 03.03.2003 DE 10309065
(43) Veröffentlichungstag der Anmeldung: 08.09.2004
(73) Patentinhaber: LuK Lamellen und Kupplungsbau Beteiligungs KG, 77815 Bühl (DE)
(72) Erfinder: Berger, Reinhard, Dr., 77815 Bühl (DE); Pollak, Burkhard, Dr., 77815 Bühl (DE)

(56) Entgegenhaltungen:
- EP-A- 0 383 731
- DE-A- 3 206 740
- DE-A- 19 522 477
- US-A- 2 758 686

## Beschreibung

Die Erfindung betrifft einen Antriebsstrang mit einer im Kraftschluss zwischen einer Brennkraftmaschine und einem Getriebe angeordneten Reibungskupplung mit einem mit der Brennkraftmaschine verbundenen Eingangsteil und zumindest einem mit einer Getriebeeingangswelle eines Getriebes verbundenen Ausgangsteil sowie einer Ausrückvorrichtung hierzu. US 2 758 686, das als nächstliegender Stand der Technik angesehen wird, offenbart ein Kupplungsausrücksystem mit einer Pumpe, die einen Druck bereitstellt, der den Kolben eines Nehmerzylinders abhängig vom Steuerungszustand des Steuerzylinders axial verlagert.

In an sich bekannter Weise werden Reibungskupplungen mittels eines hydraulischen Ausrücksystems, bestehend aus einem manuell oder automatisch betätigten Geberzylinder und einem die Kupplung ausrückenden Nehmerzylinder, wobei beide Zylinder mittels einer hydraulischen Leitung verbunden sind, betätigt. Bei sogenannten zwangsweise zugedrückten Kupplungen ist dabei im kraftfreien Zustand der Kupplung die Kupplung ausgerückt und der Reibeingriff zum Verbinden von Brennkraftmaschine und Getriebe erfolgt durch Betätigen und Halten des Nehmerzylinders unter Druck durch den Geberzylinder. Insbesondere für Doppelkupplungen, bei denen ein gemeinsames Eingangsteil auf zwei Ausgangsteile mit jeweils einer Getriebeeingangswelle verzweigt wird, ist die Beschaltung der Kupplungen in dieser Weise vorteilhaft. Fallen beide oder eine der beiden Ausrückvorrichtungen, beispielsweise durch Druckmittelverlust aus, so werden diese Kupplungen stets geöffnet und verblocken nicht das Getriebe, wie es beispielsweise bei gewöhnlichen im kraftfreien Zustand geschlossenen Kupplungen der Fall ist.

Reibungskupplungen der genannten Art werden in der Regel neben manuell betätigten Getrieben in automatisierten Getrieben eingesetzt, beispielsweise in automatisierten Schaltgetrieben (ASG) oder Doppelkupplungsgetrieben (PSG), die im allgemeinen von einem Steuergerät angesteuert werden, wobei sowohl die Kupplung als auch das Einund Auslegen der Gänge automatisiert betrieben wird. Fällt ein derartiges Steuergerät aus, kann es in Abhängigkeit der angewandten Steuerstrategie vorkommen, dass die Kupplungsstellung einer Kupplung beziehungsweise in einem Doppelkupplungsgetriebe beider Kupplungen eingefroren wird, und daher der Betrieb der Brennkraftmaschine unabhängig von der Getriebeausgangsdrehzahl und damit der Raddrehzahl nicht mehr steuerbar ist, das heißt, dass beispielsweise bei stehendem Fahrzeug ein Betrieb der Brennkraftmaschine zur Aufrechterhaltung von Nebenaggregaten nicht mehr möglich ist.

Aufgabe der Erfindung ist es daher einen Antriebsstrang vorzuschlagen, der bei Ausfall der Getriebesteuerung das Trennen einer nicht mehr öffnenden Kupplung ermöglicht. Die Ausführung dieser Aufgabe sollte einfach, kostengünstig und nicht montageaufwendig sein. Es sollten möglichst wenige Neuteile erforderlich sein. Weiterhin soll vermieden werden, dass bei einem Ausfall der Getriebesteuerung der Fahrer für den ungestörten Fahrbetrieb unübliche Handhabungen leisten muss.

Die Aufgabe wird durch einen Antriebsstrang gemäß Anspruch 1 gelöst, wobei das zumindest eine Ausgangsteil in kraftfreiem Zustand von dem Eingangsteil abgekoppelt ist und mittels der zumindest einen Ausrückvorrichtung in Reibeingriff mit dem Eingangsteil gebracht wird und die zumindest eine Ausrückvorrichtung aus einem Geberzylinder und einem mittels einer hydraulischen Leitung mit dem Geberzylinder in Wirkverbindung stehenden Nehmerzylinder gebildet ist, und in die hydraulische Leitung zwischen dem Geberzylinder und dem Nehmerzylinder eine Druckentspannungsvorrichtung vorgesehen ist, die einen zwischen dem Geberzylinder und dem Nehmerzylinder angelegten Druck zurücksetzt, wenn sie von außen betätigt wird.

Besonders vorteilhaft ist gemäß des erfinderischen Gedankens eine Umsetzung in einer Doppelkupplung, wobei jeweils ein drehfest mit dem Eingangsteil verbundenes Ringteil von jeweils einer Ausrückvorrichtung betätigt wird, wobei das Ausgangsteil mit dem Eingangsteil einen Reibeingriff bildet und zumindest eine Ausrückvorrichtungen über die besagte Druckentspannungsvorrichtung verfügt. Es versteht sich, dass in vorteilhafter Weise beide Ausrückvorrichtungen mit einer Druckentspannüngsvorrichtung versehen sind.

Die Betätigung von außen sieht dabei vor, dass bei einem Defekt der Steuerung des Getriebes und der automatisierten Kupplung der Fahrer auf den Ausrückzustand der beiden Kupplungen Einfluss nehmen kann, wobei er eine Betätigungsvorrichtung zum Betätigen der Druckentspannungsvorrichtung bedient. Besonders vorteilhaft kann hierbei sein, wenn im Falle einer Doppelkupplung beide Druckentspannungsvorrichtungen mittels einer einzigen Betätigungsvorrichtung betätigbar sind. Weiterhin kann von Vorteil sein, wenn der Fahrer diese Betätigungsvorrichtung in Verbindung mit gewohnten Tätigkeiten ausführt. Beispielweise kann die Betätigung der Druckentspannungsvorrichtung mit der Betätigung des Wählhebels zum Wählen von Betriebsprogrammen des Fahrzeugs wie beispielsweise das Wählen von Fahrstufen des Getriebes oder das Einlegen einer Parksperrekombiniert sein, wobei in Abhängigkeit der Wählhebelstellung die Betätigung der Druckentspannungsvorrichtung erfolgt. Beispielsweise kann in der Wählstellung "Neutral" oder "Parksperre" die Druckentspannungsvorrichtung betätigt werden, während in einer Stellung für Vorwärts- oder Rückwärtsfahrt, bei einer Vorgabe eines manuellen Betriebsprogramms, bei dem die Fahrstufen oder Gänge durch Bewegung des Wählhebels hoch oder zurück geschaltet werden, unterbleiben.

Die Übertragung des Signals von der Betätigungsvorrichtung auf die Druckentspannungsvorrichtung kann mechanisch, beispielsweise mittels eines Bowdenzugs oder eines Gestänges, hydraulisch, beispielsweise mittels einer Geber-/Nehmerzylindervorrichtung, oder elektrisch (by-wire), beispielsweise mittels zumindest eines an der Betätigungsvorrichtung angeordneten Schalters, der in Verbindung mit einem Magnetventil an der Druckentspannungsvorrichtung steht. Es versteht sich, dass derartige Wirkverbindungen auch in Kombination oder auf andere Weise ausgestaltet sein können.

In einem Ausführungsbeispiel weist die Druckentspannungsvorrichtung vorteilhafterweise einen eingangsseitigen Zulauf vom Geberzylinder und einen ausgangsseitigen Auslauf zum Nehmerzylinder auf. Dazwischen ist eine Kammer mit einem idealerweise vernachlässigbaren Totvolumen vorgesehen, das mittels eines axial verlagerbaren Kolbens in Abhängigkeit vom in der hydraulischen Leitung anstehenden Druck erweiterbar ist. Es versteht sich, dass der Kolben gegenüber der Kammer mit Dichtmitteln abgedichtet ist, beispielsweise können Dichtringe wie beispielsweise O-Ringe oder Nutringdichtungen, wie sie aus Geber- und Nehmerzylindern bekannt sind, verwendet werden. Dieser Kolben wird an seiner axialen Verlagerung durch eine Fixiervorrichtung gehindert, solange die Druckentspannungsvorrichtung nicht betätigt werden soll. Die Fixiervorrichtung steht dabei in Wirkkontakt mit der Wirkverbindung der Betätigungsvorrichtung, beispielsweise kann am Bowdenzug ein bezüglich der Kolbenachse radial eingreifender Stift vorgesehen sein, der durch die Bewegung des Bowdenzugs in den Kolben eingreift. Der Kolben kann alternativ oder zusätzlich mit weiteren Mitteln beispielsweise elektrischen Mitteln, wie Elektromagneten oder Piezoelementen fixiert werden.

Zwei Druckentspannungsvorrichtungen können in vorteilhafter Weise in einem Gehäuse untergebracht sein und/oder in das Gehäuse eines Geberzylinder oder Nehmerzylinders integriert sein. Besonders vorteilhaft kann die Integration der Druckentspannungsvorrichtung(en) in eine Baueinheit, die aus der elektrischen Aktorik, beispielsweise einem Elektromotor oder einem Piezzoelement, dem Getriebe zum Umsetzung der Drehbewegung eines Elektromotors in eine translatorische Bewegung des Geberzylinders, und dem Geberzylinder besteht, wobei auch die gesamte Integration von zwei derartigen Baueinheiten für die Betätigung von zwei Kupplungen vorteilhaft sein kann, beispielsweise indem Bauraum und Gehäuseteile eingespart wird.

In einer weiteren vorzugsweisen Ausgestaltung kann die Betätigungseinrichtung mittels der Wirkeinrichtung die Druckentspannungsvorrichtung so betätigen, dass bei stromlos geschalteter Wirkverbindung diese betätigt ist, also nach der bisherigen Ausdrucksweise die Druckentspannungsvorrichtung einen Druckausgleich in der hydraulischen Leitung ermöglicht. Dies hat unter anderem den Vorteil, dass bei einem gleichzeitigen Ausfall von Steuergerät und Betätigungseinrichtung beispielsweise durch einen Totalausfall der Stromversorgung die Druckentspannungsvorrichtung immer noch ihre Funktion erfüllt und die Kupplung(en) öffnet. Hierzu kann ein Elektromagnetventil oder Piezzoelement eingesetzt werden, das die Druckentspannungsvorrichtung direkt bildet, indem beispielsweise die Druckmittelleitung durch Bewegung eines Schiebers oder Kolbens entspannt wird.

Weiterhin kann es insbesondere bei der Verwendung einer elektrisch betätigten Druckentspannungsvorrichtung von Vorteil sein, bei schnellem Hin- und Herschalten des Wählhebels zwischen dem Betriebsprogramm "Rückwärts" und "Vorwärts" das Auslösen der Druckentspannungseinrichtung zu verhindern, wenn beispielsweise bei diesen Wählvorgängen ddas Betriebsprogramm "Neutral" durchfahren wird. In diesem Fall oder immer kann das Auslösen im Betriebsprogramm "Neutral" auch verzögert werden. Es haben sich Verzögerungszeiten zwischen 0,1 und 1 Sekunde als vorteilhaft erwiesen.

Es versteht sich, dass die vorgeschlagene Volumenausgleichseinrichtung auch für Kupplungen vorteilhaft sein kann, mittels derer Nebenaggregate wie beispielsweise einen Klimakompressor oder eine Elektromaschine zum Starten der Brennkraftmaschine, zum unterstützenden oder alleinigen Antrieb des Fahrzeugs und/oder zum Erzeugen von elektrischer Energie an den Antriebsstrang gekoppelt werden können. Im Falle eines Doppelkupplungsgetriebes kann es dabei von Vorteil sein, ein Nebenaggregat mit einer der beiden Getriebeeingangswellen und/oder mit der Kurbelwelle abkoppelbar vorzusehen.

Die Erfindung wird anhand der Figuren 1 bis 4 näher erläutert.

Dabei zeigen:
Figur 1 einen schematischen Antriebsstrang gemäß der Erfindung und
die Figuren 2 bis 4 ein Ausführungsbeispiel einer Druckentspannungsvorrichtung in verschiedenen Betriebszuständen.

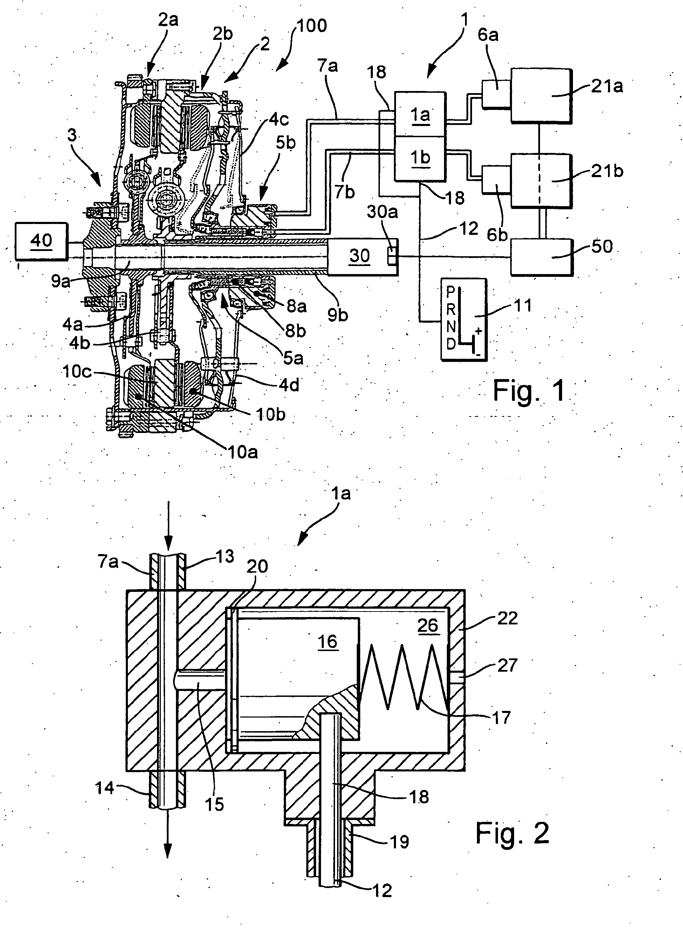

Figur 1 zeigt einen schematisch dargestellten Antriebsstrang 100 mit einer Brennkraftmaschine 40 und einem nachgeordneten Getriebe 30, das hier als Doppelkupplungsgetriebe mit zwei Getriebeeingangswellen 9a, 9b vorgesehen ist. Im Kraftfluss zwischen Brennkraftmaschine 40 und Getriebe 30, ist eine Doppelkupplung 2 mit dem Ausgangsteil 3, das mit der Kurbelwelle der Brennkraftmaschine drehschlüssig verbunden ist und konventionell in starrer Ausführung, als sogenanntes Flexplate - wie in der Figur 1 gezeigt - axial elastisch oder als Zweimassenschwungrad ausgebildet sein kann, und mit zwei Ausgangsteilen 4a und 4b, die jeweils drehschlüssig mit einer Getriebeeingangswelle 9a und 9b als sogenannte Kupplungsscheiben mit Reibbelägen, die einen Reibeingriff mit dem Eingangsteil 3 bilden, angeordnet. Das Eingangsteil 3 weist hierzu eine axial fest angeordnete Anpressplatte 10c mit beidseitig angeordneten Reibeingriffsflächen auf und ist mit jeweils für ein Ausgangsteil vorgesehenen, axial verlagerbaren und drehschlüssig mit dem Eingangsteil 3 verbundenen Ringscheibenteilen 10a, 10b, die jeweils eine Reibeingriffsfläche aufweisen, drehschlüssig verbunden. Durch Axialverlagerung der Ringscheibenteile 10a, 10b wird der Reibeingriff zu den Reibflächen der Ausgangsteile 4a, 4b hergestellt. Die Ringflächen sind in kraftfreiem Zustand beispielsweise mittels Blattfedern so von der Anpressplatte 10c beabstandet, dass kein Reibeingriff erfolgt, das heißt, dass beide den Ausgangsteilen 4a, 4b zugeordneten Kupplungen 2a, 2b zwangsweise zugedrückte Kupplungen sind.

Die Kupplungen 2a, 2b werden jeweils mit einer Axialverlagerung der Ausrückhebel 4c und 4d eingerückt. Dabei werden die Hebel 4c und 4d von den jeweiligen Kupplungsbetätigungsvorrichtungen 5a, 5b solange in diesem Zustand gehalten, bis ein Ausrücken der Kupplung gewünscht ist. Für beide Kupplungen kann - wie an sich bekannt - jeweils eine Nachstellvorrichtung vorgesehen sein, wobei auch eine einzige gemeinsame Nachstelleinrichtung auf beide Kupplungen wirken kann. Es versteht sich, dass im Sinne der Erfindung auch andere Kupplungsformen und Ausgestaltungen wie beispielsweise zwangsweise zugezogene Kupplungen vorteilhaft sein können.

Die beiden Reibungskupplungen 2a und 2b werden durch Ausrückvorrichtungen 5a, 5b betätigt, die jeweils aus einem Geberzylinder 6a, 6b, die vorzugsweise mittels jeweils eines elektrischen Aktors 21a, 21b in an sich bekannter Weise betätigt werden, jeweils einem Nehmerzylinder 8a, 8b, die vorzugsweise als konzentrisch um die Getriebeeingangswellen 9a, 9b angeordnete Ringzylinder, über den Umfang um die Getriebeeingangswellen verteilte Zylinder oder über einen Hebelmechanismus im Wesentlichen zu den Getriebeeingangswellen parallel angeordnete Zylinder sein können, und jeweils einer die Nehmerzylinder 8a, 8b und die Geberzylinder 6a, 6b verbindenden Zuleitung 7a, 7b.

In die Zuleitung 7a, 7b ist die Druckentspannungsvorrichtung 1 integriert, die in einem Gehäuse die Druckentspannungsvorrichtungen 1a, 1b für die jeweiligen Ausrückvorrichtungen 5a, 5b beinhaltet. Es versteht sich, dass die beiden Druckentspannungsvorrichtungen 1a, 1b auch getrennt ausgeführt sein können und beispielsweise in eines der Bauteile der Ausrücksysteme integriert sein können, beispielsweise in die Geberzylinder 6a, 6b oder in die Nehmerzylinder 8a, 8b. Die Druckentspannungsvorrichtung 1 wird von außen beispielsweise durch den Fahrer angesteuert. Hierzu verfügt der Fahrer über eine Betätigungsvorrichtung 11, die in dem dargestellten Ausführungsbeispiel der Wählhebel zum Wählen von Betriebsprogrammen des Fahrzeugs mit den beispielhaften Funktionen Parksperre P, Rückwärts R, Neutral N, Vorwärts D und manuelle Tipp-Schaltung +, - ist.

Über eine Wirkverbindung 12, die ein Bowdenzug oder ein elektrisches Verbindungsmittel sein kann, wird der Betätigungswunsch von der Betätigungsvorrichtung 11 auf die Druckentspannungsvorrichtung 1 übertragen, wobei in dem gezeigten Beispiel eine Wirkverbindung auf zwei Fixiervorrichtungen 18 einwirkt, die einen Volumenausgleich verhindern und im Falle der Betätigung diesen ermöglichen.

Die Wirkungsweise des in Figur 1 dargestellten Antriebsstrangs 100 ergibt sich wie folgt:

Das Getriebesteuergerät 50, steuert die Getriebebetätigungsvorrichtung, die entsprechend der Fahrsituation Gänge im Getriebe aus- und einlegt und hierzu koordiniert die Aktoren wie die Elektromotoren 21a, 2b, zur Betätigung der Kupplungen 2a, 2b, wodurch der Antriebsstrang 100 vollständig automatisierbar ist oder der Fahrer durch Antippen des Wählhebels in der Position +, - fremdkraftbetätigt mit automatisierter Kupplung 2 schatten kann. Sind die Geberzylinder 6a und 6b in ihrer Ruhestellung, das heißt, die Kupplungen 2a, 2b geöffnet, wird der Druck in den Ausrückvorrichtungen 5a, 5b durch Verbindungen mit einem nicht dargestellten Ausgleichsbehälter dem Atmosphärendruck angeglichen. Ein gegebenenfalls anstehender Druck wird abgebaut. Bei Betätigung der Geberzylinder 6a, 6b wird die Verbindung zum Ausgleichsbehälter geschlossen, in der Leitung 7a, 7b wird ein Druck aufgebaut und die Reibungskupplungen 2a, 2b werden betätigt. Fällt in einer derartigen Situation das Steuergerät 50 aus, verbleiben die Geberzylinder 6a, 6b in ihrer momentanen Position, wodurch die Kupplungen 2a, 2b je nach Stellung der Hebelmechanismen 4c, 4d im Reibeingriff bleiben. Um nun eine Abkopplung der Brennkraftmaschine 40 vom Getriebe 30 zu erzielen, wird vom Fahrer die Betätigungsvorrichtung 11 aktiviert und damit die Druckentspannungsvorrichtung 1 betätigt, so dass der in den Leitungen 7a, 7b aufgebaute Druck abgebaut und die Kupplungen 2a, 2b geöffnet werden. In besonders vorteilhafter Weise werden verschiedene Stellungen der Betätigungsvorrichtung 11 als Schalthebel ausgenutzt, um die Druckentspannungsvorrichtung zu betätigen. Beispielsweise wird die Druckentspannungsvorrichtung 1 grundsätzlich in den Stellungen neutral N und Parksperre P, so dass der Fahrer nicht mit der Entscheidung konfrontiert wird, die Betätigungsvorrichtung in bestimmten Situationen betätigen zu müssen sondern die Volumenausgleichseinrichtung 1 in Situationen mitbetätigt wird, in denen der Fahrer den Wählhebel sowieso betätigen würde, zum Beispiel beim Anhalten oder in unsicherer Fahrsituation.

Figur 2 zeigt eine Druckentspannungsvorrichtung 1a für eine Ausrückvorrichtung 5a der Figur 1 anhand eines Ausgestaltungsbeispiels im Detail. Das Gehäuse 22 hat jeweils einen Anschluss 13 von der Geberzylinderseite her und einen Anschluss 14 zur Nehmerzylinderseite hin und ist in die hydraulische Leitung 7a eingebaut. Zwischen den beiden Anschlüssen 13, 14 ist eine Kammer 15 mit einem vorgegebenen, idealerweise minimierten Totvolumen ausgebildet, die von einem Kolben 16 begrenzt wird. Der Kolben 16 ist in einer weiteren Kammer 26 aufgenommen und dichtet mittels eines Dichtmittels 20, das eine Ringdichtung wie Nutringdichtung oder ein O-Ring sein kann, die beiden Kammern 15, 26 gegeneinander ab. Die Fixiervorrichtung 18, die in dem gezeigten Ausführungsbeispiel als in den Kolben hineinragender Stift 18 als Fortsatz des Bowdenzugs 12, der durch die Durchführung 19 geführt ist, ausgebildet ist, hält den Kolben 16 bei eingerastetem Zustand an seiner axialen Position. Die Durchführung 19 kann dabei abdichtende Wirkung haben und weiterhin eine Ummantelung des Bowdenzugs 12 aufnehmen. Der Kolben 16 ist zur Minimierung des Totvolumens der Kammer 15 mit einer Kraft beaufschlagt, die von dem Energiespeicher 17 - hier als Schraubenfeder dargestellt - aufgebracht wird. Im Gehäuse 22 ist zum Druckausgleich eine Öffnung 27 vorgesehen. Es versteht sich, dass die Beaufschlagung des Kolbens mit einer Kraft zur Minimierung des Totvolumens der Kammer 15 auch mit weiteren oder alternativen Mitteln vorgesehen sein kann, beispielsweise kann die Öffnung 27 verschlossen oder druckbeaufschlagt sein, wobei der Energiespeicher 17 entsprechend dimensioniert wird oder wegfallen kann. In einem speziellen Ausführungsbeispiel kann die Öffnung 27 mit einem Druck beaufschlagt werden, der durch die Betätigungsvorrichtung 11 (Figur 1) beispielsweise mittels eines Hydraulikschalters mit einer Druckversorgungsvorrichtung bereit gestellt wird.

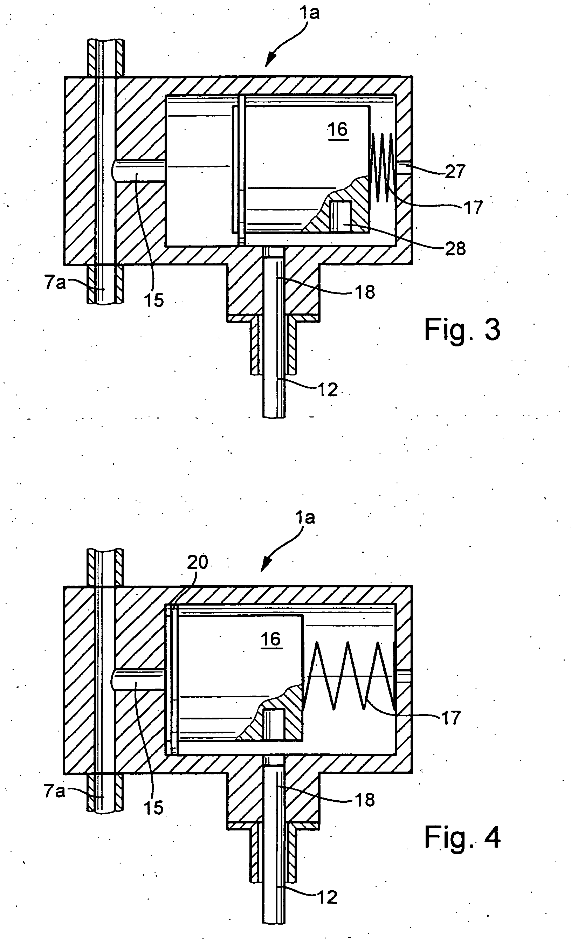

Die Figur 2 zeigt die Druckentspannungsvorrichtung 1a in fixiertem Zustand. Figur 3 zeigt dieselbe Druckentspannungsvorrichtung 1a in betätigtem Zustand mit zurückgezogenem Bowdenzug 12 und damit entsperrter Fixiervorrichtung 18, die aus einer Ausnehmung 28 im Kolben 16 herausgezogen wurde, so dass bei einem in der Leitung 7a anliegenden Druck mit einer auf den Kolben 16 wirkenden Druckkraft, die größer als die Federkraft des Energiespeichers 17 ist, der Kolben 16 verlagert wird und damit die Kammer 15 einen Volumenzuwachs erhält, der dazu führt, dass die Kupplung 2a (Figur 1) ausgerückt wird.

Figur 4 zeigt eine Situation, bei der Zuleitung 7a drucklos ist, beispielsweise bei einem Geberzylinder 6a in Ruheposition, in der Zuleitung 7a in Verbindung mit dem Ausgleichsbehälter steht. In diesem Fall ist die Fixiervorrichtung ebenfalls durch die Betätigungsvorrichtung 11 (Figur 1) über den Bowdenzug 12 gelöst, weil beispielsweise der Fahrer bei funktionsfähigem Steuerteil 50, die Stellung Parksperre oder neutral gewählt hat, an der Stellung des Kolben 16 ändert sich jedoch nichts, da dieser vom Energiespeicher 17 in seiner Stellung gehalten wird. Dadurch bleibt das Volumen der Kammer 15 konstant. Es sei darauf hingewiesen, dass bei entsprechender Auslegung des Energiespeichers 17 insbesondere mit der Masse des Kolbens 16 und/oder der Hysterese des Dichtmittels 20 die Druckentspannungsvorrichtung 1a gleichzeitig als sogenanntes Kribbelfilter zur Dämpfung von Schwingungen in der Leitung 7a dienen kann, die von A-xialschwingungen der Brennkraftmaschine herrühren und über die Kupplung übertragen werden.

## Patentansprüche

1. Antriebsstrang (100) mit einer Reibungskupplung zum Abkoppeln eines Getriebes (30) von einer Brennkraftmaschine (40) mit einem Eingangsteil (3), zumindest einem von dem Eingangsteil abkoppelbaren Ausgangsteil (4a,4b) und zumindest einer Ausrückvorrichtung (5a,5b), wobei das zumindest eine Ausgangsteil in kraftfreiem Zustand von dem Eingangsteil abgekoppelt ist und mittels der zumindest einen Ausrückvorrichtung in Reibeingriff mit dem Eingangsteil gebracht wird und die zumindest eine Ausrückvorrichtung aus einem Geberzylinder (6a,6b) und einem mittels einer hydraulischen Leitung (7a) mit dem Geberzylinder in Wirkverbindung stehenden Nehmerzylinder (8a,8b) gebildet ist, wobei die hydraulische Leitung zwischen dem Geberzylinder und dem Nehmerzylinder eine Druckentspannungsvorrichtung (1) aufweist, die einen zwischen dem Geberzylinder (6a,6b) und dem Nehmerzylinder (8a,8b) angelegten Druck zurücksetzt, wenn sie von außen betätigt wird.

2. Antriebsstrang nach Anspruch 1, **dadurch gekennzeichnet, dass** die Reibungskupplung (2a,2b) als Doppelkupplung (2) mit einem Eingangsteil und mit jeweils mit einer Getriebeeingangswelle (9a,9b) drehfest verbundenen Ausgangsteil (3) ausgeführt ist, wobei jeweils eine Ausrückvorrichtung (5a,5b) ein axial verlagerbares, mit dem Eingangsteil drehfest verbundenes Ringteil betätigt.

3. Antriebsstrang nach Anspruch 2, **dadurch gekennzeichnet, dass** beide Ausrückvorrichtungen mit jeweils einer Druckentspannungsvorrichtung (1a,1b) versehen sind.

4. Antriebsstrang nach einem der Ansprüche 1 bis 3 **dadurch gekennzeichnet, dass** die Druckentspannungsvorrichtung (1) vom Fahrer mittels einer Betätigungsvorrichtung (11) betätigbar ist.

5. Antriebsstrang nach Anspruch 3 und 4, **dadurch gekennzeichnet, dass** beide Druckentspannungsvorrichtungen (1a,1b) mittels einer einzigen Betätigungsvorrichtung (11) betätigbar sind.

6. Antriebsstrang nach einem der Ansprüche 1 bis 5, **dadurch gekennzeichnet, dass** zwei Druckentspannungsvorrichtungen (1a,1b) für eine Doppelkupplung (2) in einem Gehäuse (22) untergebracht sind.

7. Antriebsstrang nach einem der Ansprüche 1 bis 6, **dadurch gekennzeichnet, dass** die zumindest eine Druckentspannungsvorrichtung (1) in einen Geberzylinder (6a,6b) oder Nehmerzylinder (8a,8b) integriert ist.

8. Antriebsstrang nach Anspruch 4, **dadurch gekennzeichnet, dass** die Betätigungsvor-richtung (11) ein mit der Druckentspannungsvorrichtung (1) in Wirkverbindung stehender Wählhebel zum Einstellen des Betriebsprogrammes des Getriebes durch den Fahrer ist.

9. Antriebsstrang nach einem der Anspruch 8, **dadurch gekennzeichnet, dass** die Druckentspannungsvorrichtung (1) in Abhängigkeit von der Stellung des Wählhebels betätigt wird.

10. Antriebsstrang nach einem der Anspruch 9, **dadurch gekennzeichnet, dass** eine Betätigung der Druckentspannungsvorrichtung (1) zumindest im Betriebsprogramm Neutral (N) und/oder Parksperre (P) erfolgt.

11. Antriebsstrang nach einem der Anspruch 9, **dadurch gekennzeichnet, dass** eine Betätigung der Druckentspannungsvorrichtung (1) bei einer Wählstellung Vorwärts (D) oder Rückwärts (R) oder in einem manuellen Betriebsprogramm (+, -) unterbleibt.

12. Antriebsstrang nach einem der Ansprüche 1 bis 11, **dadurch gekennzeichnet, dass** die Druckentspannungsvorrichtung einen eingangsseitigen Zulauf und einen ausgangsseitigen Auslauf aufweist und zwischen diesen eine Kammer (15) mit einem Totvolumen vorgesehen ist, das mittels eines axial verlagerbaren, gegenüber der Kammer abgedichteten Kolbens (16) entgegen der Wirkung eines Energiespeichers (17) erweiterbar ist, wenn die durch den in der Druckleitung anstehenden Druck -auf-den-Kolben wirkende Kraft größer als die auf den Kolben wirkende Axialkraft des Energiespeichers ist und der Kolben bezüglich seiner axialen Verlagerung von der Wirkverbindung freigegeben ist.

13. Antriebsstrang nach einem der Ansprüche 8 bis 12, **dadurch gekennzeichnet, dass** die Wirkverbindung ein mit der Betätigungsvorrichtung verbundener Bowdenzug (12) ist.

14. Antriebsstrang nach einem der Ansprüche 8 bis 12, **dadurch gekennzeichnet, dass** die Wirkverbindung eine elektrische Wirkverbindung ist.

15. Antriebsstrang nach Anspruch 14, **dadurch gekennzeichnet, dass** die Wirkverbindung auf einen elektrisch betätigten Stift (18) wirkt, der in Verbindung mit einem an der Betätigungsvorrichtung vorgesehen Schalter steht.

16. Antriebsstrang nach Anspruch 14, **dadurch gekennzeichnet, dass** die Wirkverbindung auf ein elektrisch betätigtes Ventil wirkt, das in Verbindung mit einem an der Betätigungsvorrichtung (11) vorgesehen Schalter steht.

17. Antriebsstrang nach einem der Ansprüche 14 bis 16, **dadurch gekennzeichnet, dass** die elektrische Wirkverbindung in Verbindung mit einem elektrischen Ventil steht, das direkt die Druckentspannungsvorrichtung (1) bildet.

18. Antriebsstrang nach einem der Ansprüche 14 bis 17, **dadurch gekennzeichnet, dass** die elektrische Wirkverbindung die Druckentspannungsvorrichtung (1) in strombelasteten entgegen der Wirkung eines Energiespeichers, in gespanntem Zustand hält und in stromlosem Zustand betätigt, indem die Wirkung des Energiespeichers freigegeben wird.

19. Antriebsstrang nach einem der Ansprüche 9 bis 18, **dadurch gekennzeichnet, dass** die Betätigung der Druckentspannungsvorrichtung (1) bei einem schnellen Wechsel zwischen den Betriebsprogrammen Vorwärts (D) und Rückwärts (R) mit einem Durchfahren der Wählhebelstellung für das Betriebsprogramm Neutral (N) nicht erfolgt.

20. Antriebstrang nach Ansprüchen 9 bis 19, **dadurch gekennzeichnet, dass** die Betätigung der Druckentspannungsvorrichtung (1) nach einer Wahl des Betriebsprogrammes Neutral (N) um eine vorgegebene Verzögerungszeit verzögert wird.

21. Antriebsstrang nach Anspruch 20, **dadurch gekennzeichnet, dass** die Verzögerungszeit im Bereich zwischen 0,1 und 1s liegt.

## Claims

1. A drive train (100) with a friction clutch for disengaging a transmission (30) from a combustion engine (40), having an input part (13), at least one output part (4a, 4b) which is uncouplable from the input part, and at least one disengaging device (5a, 5b), where the at least one output part is uncoupled from the input part in the unpowered state and is brought into frictional engagement with the input part by means of the at least one disengaging device, and the at least one disengaging device is made up of a master cylinder (6a, 6b) and a slave cylinder (8a, 8b) which is operationally connected to the master cylinder by means of a hydraulic line (7a), wherein the hydraulic line having a pressure relief device (1) between the master cylinder and the slave cylinder which lowers a pressure applied between the master cylinder (6a, 6b) and the slave cylinder (8a, 8b) when it is operated from outside.

2. The drive train according to Claim 1, **characterized in that** the friction clutch (2a, 2b) is designed as a dual clutch (2) having an input part and an output part (3) connected in each case with a transmission input shaft (9a, 9b) in a rotationally fixed connection, where in each case a disengaging device (5a, 5b) operates an axially movable ring piece which is connected to the input part in a rotationally fixed connection.

3. The drive train according to Claim 2, **characterized in that** both disengaging devices are each provided with a pressure relief device (1a, 1b).

4. The drive train according to one of Claims 1 through 3, **characterized in that** the pressure relief device (1) is operable by the driver by means of an operating device (11).

5. The drive train according to Claims 3 and 4, **characterized in that** both pressure relief devices (1a, 1 b) are operable by means of a single operating device (11).

6. The drive train according to one of Claims 1 through 5, **characterized in that** two pressure relief devices (1a, 1 b) for a dual clutch (2) are accommodated in one housing (22).

7. The drive train according to one of Claims 1 through 6, **characterized in that** the at least one pressure relief device is integrated into a master cylinder (6a, 6b) or slave cylinder (8a, 8b).

8. The drive train according to Claim 4, **characterized in that** the operating device (11) is a selector lever which is operationally connected to the pressure relief device (1), for the driver to set the operating program of the transmission.

9. The drive train according to Claim 8, **characterized in that** the pressure relief device (1) is operated depending on the position of the selector lever.

10. The drive train according to Claim 9, **characterized in that** operation of the pressure relief device (1) occurs at least in the operating program Neutral (N) and/or Park (P).

11. The drive train according to Claim 9, **characterized in that** operation of the pressure relief device (1) does not occur with the selector in the Drive (D) or Reverse (R) position or in a manual operating program (+, -).

12. The drive train according to one of Claims 1 through 11, **characterized in that** the pressure relief device has an intake on the input side and an outflow on the output side, and that between these there is a chamber (15) with a dead volume, which can be enlarged by means of an axially movable piston (16) which is sealed from the chamber against the effect of an energy storage device (17), if the force acting on the piston through the pressure in the pressure line is greater than the axial force of the energy storage device acting on the piston, and the piston is released from the operating connection with respect to its axial displacement.

13. The drive train according to one of Claims 8 through 12, **characterized in that** the operating connection is a Bowden cable (12) connected to the operating device.

14. The drive train according to one of Claims 8 through 12, **characterized in that** the operating connection is an electrical operating connection.

15. The drive train according to Claim 14, **characterized in that** the operating connection acts on an electrically activated pin (18), which is connected to a switch provided on the operating device.

16. The drive train according to Claim 14, **characterized in that** the operating connection acts on an electrically activated valve, which is connected to a switch provided on the operating device (11).

17. The drive train according to one of Claims 14 through 16, **characterized in that** the electrical operating connection is connected to an electric valve which directly forms the pressure relief device (1).

18. The drive train according to one of Claims 14 through 17, **characterized in that** the electrical operating connection holds the pressure relief device (1) under tension against the effect of an energy storage device when electrical power is applied and operates it when no current is present, **in that** the effect of the energy storage device is released.

19. The drive train according to one of Claims 9 through 18, **characterized in that** operating the pressure relief device (1) when quickly changing between the operating programs Drive (D) and Reverse (R) does not involve passing through the selector lever position for the operating program Neutral (N).

20. The drive train according to Claims 9 through 19, **characterized in that** the operation of the pressure relief device (1) is delayed by a defined delay time after a selection of the operating program Neutral (N).

21. The drive train according to Claim 20, **characterized in that** the delay time is in the range between 0.1 and 1 second.

## Revendications

1. Ligne de transmission d'entraînement (100) comprenant un embrayage à friction pour désaccoupler une boite de vitesses (30) d'un moteur à combustion interne (40) et comportant une partie d'entrée (3), au moins une partie de sortie (4a, 4b) pouvant être découplée de la partie d'entrée, et au moins un dispositif de débrayage (5a, 5b), ladite au moins une partie de sortie (4a, 4b) étant, dans l'état exempt d'efforts, découplée de la partie d'entrée, et étant amenée en prise par friction avec la partie d'entrée au moyen dudit au moins un dispositif de débrayage, et ledit au moins un dispositif de débrayage étant formé par un maître-cylindre (6a, 6b) et par un cylindre récepteur (8a, 8b) en liaison d'interaction avec le maître-cylindre par l'intermédiaire d'une conduite hydraulique (7a), la conduite hydraulique présentant entre le maître-cylindre et le cylindre récepteur un dispositif de détente de pression (1) qui rabaisse ou réinitialise une pression appliquée entre le maître-cylindre (6a, 6b) et le cylindre récepteur (8a, 8b), lorsqu'il est actionné de l'extérieur.

2. Ligne de transmission d'entraînement selon la revendication 1, **caractérisée en ce que** l'embrayage à friction (2a, 2b) est réalisé sous la forme d'un embrayage double (2) avec une partie d'entrée, et respectivement deux parties de sortie (4a, 4b) chacune liée de manière fixe en rotation avec un arbre d'entrée de boite de vitesses (9a, 9b) respectif, un dispositif de débrayage respectif (5a, 5b) actionnant une pièce annulaire, qui est liée de manière fixe en rotation à la partie d'entrée et peut être déplacée axialement.

3. Ligne de transmission d'entraînement selon la revendication 2, **caractérisée en ce que** les deux dispositifs de débrayage sont pourvus chacun respectivement d'un dispositif de détente de pression (1a, 1b).

4. Ligne de transmission d'entraînement selon l'une des revendications 1 à 3, **caractérisée en ce que** le dispositif de détente de pression (1) peut être actionné par le conducteur, au moyen d'un dispositif d'actionnement (11).

5. Ligne de transmission d'entraînement selon les revendications 3 et 4, **caractérisée en ce que** les deux dispositifs de détente de pression (1a, 1b) peuvent être actionnés par un seul et même dispositif d'actionnement (11).

6. Ligne de transmission d'entraînement selon l'une des revendications 1 à 5, **caractérisée en ce que** deux dispositifs de détente de pression (1a, 1b) pour un embrayage double (2) sont logés dans un seul carter (22).

7. Ligne de transmission d'entraînement selon l'une des revendications 1 à 6, **caractérisée en ce que** ledit au moins un dispositif de détente de pression (1) est intégré à un maître-cylindre (6a, 6b) ou à un cylindre récepteur (8a, 8b).

8. Ligne de transmission d'entraînement selon la revendication 4, **caractérisée en ce que** le dispositif d'actionnement (11) est un levier de sélection qui est en liaison d'interaction avec le dispositif de détente de pression (1), et est destiné à régler un programme de fonctionnement de la boite de vitesses par le conducteur.

9. Ligne de transmission d'entraînement selon la revendication 8, **caractérisée en ce que** le dispositif de détente de pression (1) est actionné en fonction de la position du levier de sélection.

10. Ligne de transmission d'entraînement selon la revendication 9, **caractérisée en ce qu'**un actionnement du dispositif de détente de pression (1) s'effectue au moins dans le programme de fonctionnement neutre (N) et/ou verrouillage de stationnement (P) .

11. Ligne de transmission d'entraînement selon la revendication 9, **caractérisée en ce qu'**un actionnement du dispositif de détente de pression (1) n'a pas lieu dans le cas d'une position de sélection de marche avant (D) ou de marche arrière (R) ou encore dans un programme de fonctionnement manuel (+,-).

12. Ligne de transmission d'entraînement selon l'une des revendications 1 à 11, **caractérisée en ce que** le dispositif de détente de pression présente une entrée d'écoulement côté entrée et une sortie d'écoulement côté sortie, et entre celles-ci est prévue une chambre (15) avec un volume mort qui peut être agrandi à l'encontre de l'action d'un accumulateur d'énergie (17), au moyen d'un piston (16) déplaçable axialement et étanche par rapport à la chambre, lorsque la force, qui résulte de la pression régnant dans la conduite de pression et agit sur le piston, est plus grande que la force axiale de l'accumulateur d'énergie, qui agit sur le piston, et que le piston est libéré de la liaison d'interaction, quant à son déplacement axial.

13. Ligne de transmission d'entraînement selon l'une des revendications 8 à 12, **caractérisée en ce que** la liaison d'interaction est constituée par un câble sous gaine du type Bowden (12).

14. Ligne de transmission d'entraînement selon l'une des revendications 8 à 12, **caractérisée en ce que** la liaison d'interaction est une liaison d'interaction électrique.

15. Ligne de transmission d'entraînement selon la revendication 14, **caractérisée en ce que** la liaison d'interaction agit sur une broche (18) actionnée électriquement, qui est en liaison avec un commutateur prévu sur le dispositif d'actionnement.

16. Ligne de transmission d'entraînement selon la revendication 14, **caractérisée en ce que** la liaison d'interaction agit sur une soupape ou vanne actionnée électriquement, qui est en liaison avec un commutateur prévu sur le dispositif d'actionnement (11).

17. Ligne de transmission d'entraînement selon l'une des revendications 14 à 16, **caractérisée en ce que** la liaison d'interaction est en liaison avec une soupape ou vanne électrique qui forme directement le dispositif de détente de pression (1).

18. Ligne de transmission d'entraînement selon l'une des revendications 14 à 17, **caractérisée en ce que** la liaison d'interaction électrique, dans l'état alimenté en courant, maintient le dispositif de détente de pression (1) dans l'état tendu à l'encontre de l'action d'un accumulateur d'énergie, et l'actionne, dans l'état coupé du courant, en libérant l'action de l'accumulateur d'énergie.

19. Ligne de transmission d'entraînement selon l'une des revendications 9 à 18, **caractérisée en ce que** l'actionnement du dispositif de détente de pression (1) ne s'effectue pas dans le cas d'un changement ou passage rapide entre les programmes de fonctionnement de marche avant (D) et de marche arrière (R) avec un passage par la position du levier de sélection affectée au programme de fonctionnement neutre (N).

20. Ligne de transmission d'entraînement selon les revendications 9 à 19, **caractérisée en ce que** l'actionnement du dispositif de détente de pression (1) est retardé d'un temps de retard prescrit, après une sélection du programme de fonctionnement neutre (N).

21. Ligne de transmission d'entraînement selon la revendication 20, **caractérisée en ce que** le temps de retard se situe dans une plage entre 0,1 et 1 s.
